# EUROPEAN PATENT SPECIFICATION

(11) **EP 2 675 052 B1**
(45) Date of publication and mention of the grant of the patent: **17.04.2019**
(21) Application number: 12839228.9
(22) Date of filing: 11.12.2012
(51) Int. Cl.: H02M 7/217, H02M 1/42, H02M 1/14

(54) **CIRCUIT AND CONTROL METHOD THEREOF**
SCHALTKREIS UND SCHALTKREISSTEUERUNGSVERFAHREN
CIRCUIT ET PROCÉDÉ DE COMMANDE DE CELUI-CI

(30) Priority: 27.04.2012 CN 201210128571
(43) Date of publication of application: 18.12.2013
(73) Proprietor: Huawei Technologies Co., Ltd., Longgang District Shenzhen, Guangdong 518129 (CN)
(72) Inventor: LIU, Peiguo, Shenzhen, Guangdong 518129 (CN); FEI, Zhenfu, Shenzhen, Guangdong 518129 (CN); SHI, Peng, Shenzhen, Guangdong 518129 (CN)
(74) Representative: Goddar, Heinz J.
(86) International application number: PCT/CN2012/086351
(87) International publication number: WO 2013/159539

(56) References cited:
- CN-A- 1 610 230
- CN-A- 101 860 192
- CN-A- 101 860 192
- CN-A- 102 664 542
- CN-A- 102 684 519
- CN-A- 102 739 033
- CN-C- 100 433 494
- US-A- 5 808 882
- US-A1- 2003 128 563
- CHONGMING QIAO ET AL: "Three-phase unity-power-factor VIENNA rectifier with unified constant-frequency integration control", POWER ELECTRONICS CONGRESS, 2000. CIEP 2000. VII IEEE INTERNATIONAL OCTOBER 15-19, 2000, PISCATAWAY, NJ, USA,IEEE, 15 October 2000 (2000-10-15), pages 125-130, XP010527897, ISBN: 978-0-7803-6489-9

## Description

### TECHNICAL FIELD OF THE INVENTION

The present invention relates to circuit technologies, and in particular, to a circuit and a circuit control method.

### BACKGROUND OF THE INVENTION

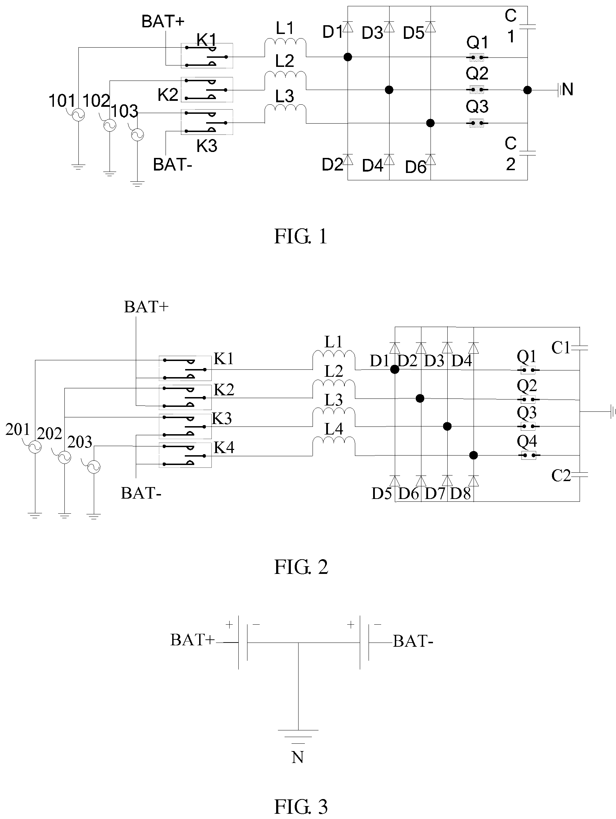

Three-phase Vienna (Vienna) power factor correction (PFC, Power Factor Correction) circuits are widely applied in inverter circuits of an uninterruptible power system (UPS, Uninterruptible Power System). As shown in FIG. 1, a three-phase Vienna PFC circuit applied in a UPS generally includes: phase A 101, phase B 102, and phase C 103 of a three-phase alternating current (AC) power supply, a battery anode BAT+ and a battery cathode BAT-, selection switches K1, K2 and K3, inductors L1, L2 and L3, diodes D1, D2, D3, D4, D5 and D6, switching transistors Q1, Q2 and Q3, capacitors C1 and C2, and a neutral wire N, where K1 may be connected to phase A or BAT+, K2 may be connected to phase B or not, and K3 may be connected to phase C or BAT-. The mains supply of the three-phase Vienna PFC circuit works primarily by means of a positive half-wave Boost circuit and a negative half-wave Boost circuit. All phases of the three-phase circuit have the same working principles of the mains supply.

The following describes the working principles of phase-A circuit.
(1) Mains supply mode:
   When phase A of the mains supply works in a positive half cycle,
   once Q1 is turned on, the flow direction of a current is: Phase A of the mains supply flows along AC(A) -> K1-> L1 -> Q1 -> N; and
   once Q1 is turned off, the flow direction of the current is: AC(A) -> K1-> L1 -> D1 -> C1 -> N;
   When phase A of the mains supply works in a negative half cycle,
   once Q1 is turned on, the flow direction of the current is: N -> Q1 -> L1 -> K1-> AC(A); and
   once Q1 is turned off, the flow direction of the current is: N -> C2 ->D2 -> L1 -> K1-> AC(A);
(2) Battery mode:
   When a Vienna PFC circuit outputs a positive half-wave current,
   once the switching transistor Q1 is turned on, the flow direction of the current is: BAT+ -> K1 -> L1 -> Q1 -> N; and
   once the switching transistor Q1 is turned off, the flow direction of the current is: BAT+ -> K1 -> L1 -> D1 -> C1 -> N;
   when a Vienna PFC circuit outputs a negative half-wave current,
   once the switching transistor Q3 is turned on, the flow direction of the current is: N -> Q3 -> L3 -> K3 -> BAT-; and
   once the switching transistor Q3 is turned off, the flow direction of the current is: N -> C2 -> D6 -> L3 -> K3 -> BAT-.

In battery mode, the phase-B inductor L2, the switching transistor, and so on, are restricted. The performance of components of a Vienna PFC circuit in the prior art is affected by capacitor ripples, but the foregoing working mode is futile for reducing ripples in the circuit. Therefore, the Vienna PFC circuit in the prior art needs further improvement.

Chongming Qiao et al.: "Three-phase unity-power-factor VIENNA rectifier with unified constant-frequency integration control", POWER ELECTRONICS CONGRESS 2000, Piscataway, NJ, USA, IEEE; 15 October 2000, pp. 125-130, discloses a circuit including three paths respectfully communicating with three phases of a three-phase power supply.

CN101860192 discloses a circuit including two paths both communicating with a phases of a power supply.

CN100433494 discloses a method for controlling a vector of a rectifier in a constant power supply. The anode and cathode of an inter battery are both communicate with three charging paths of two capacitances.

### SUMMARY OF THE INVENTION

The present invention provides a circuit of claim 1 and a circuit control method of claim 3 to reduce capacitor ripples in the circuit.

A circuit includes four bridge arm units and two capacitors, where the four bridge arm units are a first bridge arm unit, a second bridge arm unit, a third bridge arm unit, and a fourth bridge arm unit, and the two capacitors are a first capacitor and a second capacitor;

Each bridge arm unit includes two diodes, an inductor, and a switching transistor, where the two diodes are a first diode and a second diode, an anode of the first diode is connected to a cathode of the second diode, a joint between the first diode and the second diode is connected to a first port of the inductor and a first port of the switching transistor, and a second port of the switching transistor is connected to a neutral wire N; a cathode of the first diode is connected to a first port of the first capacitor, an anode of the second diode is connected to a first port of the second capacitor, and a second port of the first capacitor and a second port of the second capacitor are connected to the neutral wire N;

A second port of the inductor of the first bridge arm unit is configured to connect to a first-phase AC power supply of a three-phase power supply;

A second port of the inductor of the second bridge arm unit and a second port of the inductor of the third bridge arm unit are configured to connect to a second-phase AC power supply of the three-phase power supply; and
a second port of the inductor of the fourth bridge arm unit is configured to connect to a third-phase AC power supply of the three-phase power supply,
the circuit further comprises a first switch, the second port of the inductor of the first bridge arm unit is further configured to connect to a positive direct current power supply, and the first switch is configured to cause the second port of the inductor of the first bridge arm unit to switch between the first-phase alternating current power supply and the positive direct current power supply;
the circuit further comprises a second switch, the second port of the inductor of the second bridge arm unit is further configured to connect to the positive direct current power supply, and the second switch is configured to cause the second port of the inductor of the second bridge arm unit to switch between the second-phase alternating current power supply and the positive direct current power supply;
the circuit further comprises a third switch, the second port of the inductor of the third bridge arm unit is further configured to connect to a negative direct current power supply, and the third switch is configured to cause the second port of the inductor of the third bridge arm unit to switch between the second-phase alternating current power supply and the negative direct current power supply; and
the circuit further comprises a fourth switch, the second port of the inductor of the fourth bridge arm unit is further configured to connect to the negative direct current power supply, and the fourth switch is configured to cause the second port of the inductor of the fourth bridge arm unit to switch between the third-phase alternating current power supply and the negative direct current power supply.

A circuit control method includes:
inputting a first-phase alternating current into a second port of an inductor of a first bridge arm unit,
in a positive half cycle of inputting the first-phase alternating current,
turning on a switching transistor of the first bridge arm unit to charge the inductor of the first bridge arm unit;
turning off the switching transistor of the first bridge arm unit to charge a first capacitor; in a negative half cycle of inputting the first-phase alternating current,
turning on the switching transistor of the first bridge arm unit to charge the inductor of the first bridge arm unit;
turning off the switching transistor of the first bridge arm unit to charge a second capacitor;
inputting a second-phase alternating current into a second port of the inductor of the second bridge arm unit and a second port of the inductor of the third bridge arm unit,
in a positive half cycle of inputting the second-phase alternating current,
turning on a switching transistor of the second bridge arm unit to charge the inductor of the second bridge arm unit;
turning off the switching transistor of the third bridge arm unit to charge the first capacitor; after turning on the switching transistor of the second bridge arm unit and turning off the switching transistor of the third bridge arm unit,
turning on the switching transistor of the third bridge arm unit to charge the inductor of the third bridge arm unit;
turning off the switching transistor of the second bridge arm unit to charge the first capacitor; in a negative half cycle of inputting the second-phase alternating current,
turning on the switching transistor of the second bridge arm unit to charge the inductor of the second bridge arm unit;
turning off the switching transistor of the third bridge arm unit to charge the second capacitor; after turning on the switching transistor of the second bridge arm unit and turning off the switching transistor of the third bridge arm unit,
turning on the switching transistor of the third bridge arm unit to charge the inductor of the third bridge arm unit;
turning off the switching transistor of the second bridge arm unit to charge the second capacitor;
inputting a third-phase alternating current into a second port of an inductor of a fourth bridge arm unit,
in a positive half cycle of inputting the third-phase alternating current,
turning on a switching transistor of the fourth bridge arm unit to charge the inductor of the fourth bridge arm unit;
turning off the switching transistor of the fourth bridge arm unit to charge the first capacitor; in a negative half cycle of inputting the third-phase alternating current,
turning on the switching transistor of the fourth bridge arm unit to charge the inductor of the fourth bridge arm unit; and
turning off the switching transistor of the fourth bridge arm unit to charge the second capacitor.

The present invention improves the switching frequency of a power supply circuit equivalently by charging the capacitors alternately, thereby reducing magnetic parameters and filtering parameters of the circuit and reducing the switching ripples in the circuit.

### BRIEF DESCRIPTION OF DRAWINGS

FIG. 1 is a schematic structural diagram of a three-phase Vienna PFC circuit in the prior art;
FIG. 2 is a schematic structural diagram of a circuit according to the present invention;
FIG. 3 is a schematic connection diagram of a battery power supply; and
FIG. 4 is a schematic flowchart of a circuit control method according to the present invention.

### DETAILED DESCRIPTION OF EMBODIMENTS

The embodiments of the present invention provide a circuit and a circuit control method. The following describes the present invention in detail with reference to embodiments.

A circuit in an embodiment of the present invention includes:
four bridge arm units and two capacitors, where the four bridge arm units are a first bridge arm unit, a second bridge arm unit, a third bridge arm unit, and a fourth bridge arm unit, and the two capacitors are a first capacitor and a second capacitor;
Each bridge arm unit includes two diodes, an inductor, and a switching transistor, where the two diodes are a first diode and a second diode, an anode of the first diode is connected to a cathode of the second diode, a joint between the first diode and the second diode is connected to a first port of the inductor and a first port of the switching transistor, and a second port of the switching transistor is connected to a neutral wire N; a cathode of the first diode is connected to a first port of the first capacitor, a cathode of the second diode is connected to a first port of the second capacitor, and a second port of the first capacitor and a second port of the second capacitor are connected to the neutral wire N;
A second port of the inductor of the first bridge arm unit is configured to connect to a first-phase AC power supply of a three-phase power supply;
A second port of the inductor of the second bridge arm unit and a second port of the inductor of the third bridge arm unit are configured to connect to a second-phase AC power supply of the three-phase power supply; and
A second port of the inductor of the fourth bridge arm unit is configured to connect to a third-phase AC power supply of the three-phase power supply.

As shown in FIG. 2, the first bridge arm unit includes an inductor L1, a diode D1, a diode D5, and a switching transistor Q1, where an anode of the diode D1 is connected to a cathode of the diode D5, a joint between the diode D1 and the diode D5 is connected to a first port of the inductor L1 and a first port of the switching transistor Q1, and a second port of the switching transistor Q1 is connected to a neutral wire N; a cathode of the diode D1 is connected to a first port of the capacitor C1, a cathode of the second diode is connected to a first port of the capacitor C2, and a second port of the capacitor C1 and a second port of the capacitor C2 are connected to the neutral wire N.

The second bridge arm unit includes an inductor L2, a diode D2, a diode D6, and a switching transistor Q2. The connection of internal components of the second bridge arm unit is the same as the connection of components of the first bridge arm unit, and is not described here any further.

The third bridge arm unit includes an inductor L3, a diode D3, a diode D7, and a switching transistor Q3. The connection of internal components of the third bridge arm unit is the same as the connection of components of the first bridge arm unit, and is not described here any further.

The fourth bridge arm unit includes an inductor L4, a diode D4, a diode D8, and a switching transistor Q4. The connection of internal components of the fourth bridge arm unit is the same as the connection of components of the first bridge arm unit, and is not described here any further.

A second port of the inductor L1 of the first bridge arm unit serves as an input end of the first bridge arm unit, and may be connected to the first-phase alternating current power supply 201 through a selector switch K1.

A second port of the inductor L2 of the second bridge arm unit serves as an input end of the second bridge arm unit, and may be connected to the second-phase AC power supply 202 through a selector switch K2.

A second port of the inductor L3 of the third bridge arm unit serves as an input end of the third bridge arm unit, and may be connected to the second-phase alternating current power supply 202 through a selector switch K3.

A second port of the inductor L4 of the fourth bridge arm unit serves as an input end of the fourth bridge arm unit, and may be connected to the third-phase alternating current power supply 203 through a selector switch K4.

When the circuit in the embodiment works in alternating current (mains supply) mode, the second-phase alternating current power supply 202 inputs a second-phase alternating current into the inductor L2 and the inductor L3, and charges the capacitors C1 and C2 by turning on and off the switching transistor Q2 and the switching transistor Q3 alternately, thereby improving the switching frequency of the circuit equivalently. High switching frequency is good for reducing a magnetic parameter and a filtering parameter of the circuit, and for reducing ripples of the capacitors C1 and C2.

Further, the circuit includes a first switch, the second port of the inductor of the first bridge arm unit is further configured to connect to a positive direct current power supply, and the first switch is configured to cause the second port of the inductor of the first bridge arm unit to switch between the first-phase alternating current power supply and the positive direct current power supply;

The circuit further includes a second switch, the second port of the inductor of the second bridge arm unit is further configured to connect to a positive direct current power supply, and the second switch is configured to cause the second port of the inductor of the second bridge arm unit to switch between the second-phase alternating current power supply and the positive direct current power supply;

The circuit further includes a third switch, the second port of the inductor of the third bridge arm unit is further configured to connect to a negative direct current power supply, and the third switch is configured to cause the second port of the inductor of the third bridge arm unit to switch between the second-phase alternating current power supply and the negative direct current power supply; and
The circuit further includes a fourth switch, the second port of the inductor of the fourth bridge arm unit is further configured to connect to a negative direct current power supply, and the fourth switch is configured to cause the second port of the inductor of the fourth bridge arm unit to switch between the third-phase alternating current power supply and the negative direct current power supply.

As shown in FIG. 2, the second port of the inductor L1 of the first bridge arm unit serves as an input end of the first bridge arm unit, and is connected to the first-phase alternating current power supply 201 through a selector switch K1. Specifically, the output end of the selector switch K1 is connected to the second port of the inductor L1, a first input end of the selector switch K1 is connected to the first-phase alternating current power supply 201, and a second input end of the selector switch K1 is connected to a positive electrode BAT+ of a battery.

A second port of the inductor L2 of the second bridge arm unit serves as an input end of the second bridge arm unit, and is connected to the second-phase alternating current power supply 202 through a selector switch K2. Specifically, the output end of the selector switch K2 is connected to the second port of the inductor L2, a first input end of the selector switch K2 is connected to the second-phase alternating current power supply 202, and a second input end of the selector switch K2 is connected to BAT+.

A second port of the inductor L3 of the third bridge arm unit serves as an input end of the third bridge arm unit, and is connected to the second-phase alternating current power supply 202 through a selector switch K3. Specifically, the output end of the selector switch K3 is connected to the second port of the inductor L3, a first input end of the selector switch K3 is connected to the second-phase alternating current power supply 202, and a second input end of the selector switch K3 is connected to a negative electrode BAT- of a battery.

A second port of the inductor L4 of the fourth bridge arm unit serves as an input end of the fourth bridge arm unit, and is connected to the third-phase alternating current power supply 203 through a selector switch K4. Specifically, the output end of the selector switch K4 is connected to the second port of the inductor L4, a first input end of the selector switch K4 is connected to the third-phase alternating current power supply 203, and a second input end of the selector switch K4 is connected to BAT-.

As shown in FIG. 3, the positive electrode and the negative electrode of the battery are the anode and the cathode of a battery power supply, respectively, the battery power supply is composed of batteries codirectionally connected in series, and a joint between adjacent batteries codirectionally connected in series is connected to the neutral wire N.

Specifically, as shown in FIG. 2, in battery mode, the inductor L1 of the first bridge arm unit is connected to BAT+ through a selector switch L1, the inductor L2 of the second bridge arm unit is connected to BAT+ through a selector switch L2, the inductor L3 of the third bridge arm unit is connected to BAT- through a selector switch L3, and the inductor L4 of the fourth bridge arm unit is connected to BAT- through a selector switch L4. In the circuit in the embodiment, the first bridge arm unit and the second bridge arm unit may charge the capacitor C1 by turning on the switching transistor Q1 and the switching transistor Q2 alternately, and the third bridge arm unit and the fourth bridge arm unit may charge the capacitor C2 by turning on the switching transistor Q3 and the switching transistor Q4 alternately.

Therefore, compared with a three-phase Vienna PFC circuit in the prior art, in the embodiment of the present invention, all bridge arm units may work when the circuit is in battery mode, without any circuit component being idle, thereby improving usage of the components. Besides, in battery mode, the capacitor C1 is charged by turning on the first bridge arm unit and the second bridge arm unit alternately, which is good for reducing ripples of the capacitor C1; the capacitor C2 is charged by turning on the third bridge arm unit and the fourth bridge arm unit alternately, which is good for reducing ripples of the capacitor C2.

Preferably, the switching transistor is an insulated gate bipolar transistor or a metal-oxide semiconductor field effect transistor. The insulated gate bipolar transistor may be a transistor, which works at a frequency less than 40 kHz, and the metal-oxide semiconductor field effect transistor may be a field effect transistor, which works at frequency of 100 kHz.

The circuit in the embodiment is applicable to an uninterruptible power system device, where the uninterruptible power system device includes the circuit provided in the preceding embodiment.

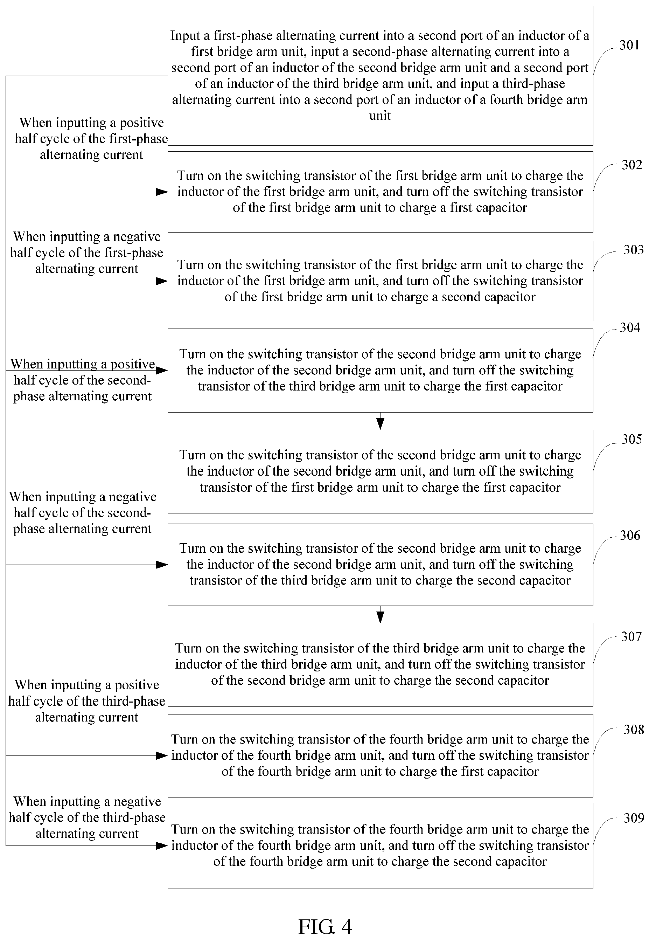

The present invention further provides a circuit control method applied to the preceding embodiment. As shown in FIG. 4, the circuit control method includes:
301. Input a first-phase alternating current into a second port of an inductor of a first bridge arm unit, input a second-phase alternating current into a second port of an inductor of the second bridge arm unit and a second port of an inductor of the third bridge arm unit, and input a third-phase alternating current into a second port of an inductor of a fourth bridge arm unit.
302. In a positive half cycle of inputting the first-phase alternating current, turn on the switching transistor of the first bridge arm unit to charge the inductor of the first bridge arm unit, and turn off the switching transistor of the first bridge arm unit to charge a first capacitor.
303. In a negative half cycle of inputting the first-phase alternating current, turn on the switching transistor of the first bridge arm unit to charge the inductor of the first bridge arm unit, and turn off the switching transistor of the first bridge arm unit to charge a second capacitor.
304. In a positive half cycle of inputting the second-phase alternating current, turn on the switching transistor of the second bridge arm unit to charge the inductor of the second bridge arm unit, and turn off the switching transistor of the third bridge arm unit to charge the first capacitor.
305. After turning on the switching transistor of the second bridge arm unit and turning off the switching transistor of the third bridge arm unit, turn on the switching transistor of the third bridge arm unit to charge the inductor of the third bridge arm unit, and turn off the switching transistor of the second bridge arm unit to charge the first capacitor.
306. In a negative half cycle of inputting the second-phase alternating current, turn on the switching transistor of the second bridge arm unit to charge the inductor of the second bridge arm unit, and turn off the switching transistor of the third bridge arm unit to charge the second capacitor.
307. After turning on the switching transistor of the second bridge arm unit and turning off the switching transistor of the third bridge arm unit, turn on the switching transistor of the third bridge arm unit to charge the inductor of the third bridge arm unit, and turn off the switching transistor of the second bridge arm unit to charge the second capacitor.
308. In a positive half cycle of inputting the third-phase alternating current, turn on the switching transistor of the fourth bridge arm unit to charge the inductor of the fourth bridge arm unit, and turn off the switching transistor of the fourth bridge arm unit to charge the first capacitor.
309. In a negative half cycle of inputting the third-phase alternating current, turn on the switching transistor of the fourth bridge arm unit to charge the inductor of the fourth bridge arm unit, and turn off the switching transistor of the fourth bridge arm unit to charge the second capacitor.

The following describes the control method in the present invention in detail with reference to FIG. 2.

In alternating current working mode (mains supply mode), the first bridge arm unit, the second bridge arm unit, the third bridge arm unit, and the fourth bridge arm unit charge the inductors and the capacitors in the circuit, where the second bridge arm unit and the third bridge arm unit are connected in parallel and work alternately to charge the same capacitor alternately.

Specifically, the first-phase alternating current of the three-phase power supply is input into the second port of the inductor of the first bridge arm unit. When the waveform of the first-phase alternating current power is in a positive half cycle, once the switching transistor Q1 is turned on, the flow direction of the current of the first bridge arm unit is: the first-phase alternating current power supply 201 → the selector switch K1 → the inductor L1 → the switching transistor Q1 → the connected neutral wire, so as to charge the inductor L1; once the switching transistor Q1 is turned off, the flow direction of the current of the first bridge arm unit is: the first-phase alternating current power supply 201 → the selector switch K1 → the inductor L1 → the diode D1 → the capacitor C1 → the connected neutral wire, so as to charge the capacitor C1.

A second-phase alternating current of the three-phase power supply is input into a second port of the inductor of the second bridge arm unit and a second port of the inductor of the third bridge arm unit.

When the waveform of the second-phase alternating current is in a positive half cycle,
once the switching transistor Q2 is turned on, the flow direction of the current of the second bridge arm unit is: the second-phase alternating current power supply 202 -> the selector switch K2 → the inductor L2 → the switching transistor Q2 → the connected neutral wire, so as to charge the inductor L2;
once the switching transistor Q3 is turned off, the flow direction of the current of the third bridge arm unit is: the second-phase alternating current power supply 202 → the selector switch K3 → the inductor L3 → the diode D3 → the capacitor C1 → the connected neutral wire, so as to charge the capacitor C1.

When the switching transistor of the second bridge arm unit and the switching transistor of the third bridge arm unit are turned on alternately,
once the switching transistor Q3 is turned on, the flow direction of the current of the third bridge arm unit is: the second-phase alternating current power supply 202 → the selector switch K3 → the inductor L3 → the switching transistor Q3 → the connected neutral wire, so as to charge the inductor L3;
once the switching transistor Q2 is turned off, the flow direction of the current of the second bridge arm unit is: the second-phase alternating current power supply 202 -> the selector switch K2 → the inductor L2 → the diode D2 → the capacitor C1 → the connected neutral wire, so as to charge the capacitor C1.

When the waveform of the second-phase alternating current is in a negative half cycle,
once the switching transistor Q2 is turned on, the flow direction of the current of the second bridge arm unit is: the connected neutral wire → the switching transistor Q2 → the inductor L2 → the selector switch K2 → the second-phase alternating current power supply 202, so as to charge the inductor L2;
once the switching transistor Q3 is turned off, the flow direction of the current of the third bridge arm unit is: the connected neutral wire → the capacitor C2 → the diode D7 → the inductor L3 → the selector switch K3 → the second-phase alternating current power supply 202, so as to charge the capacitor C2.

When the switching transistor of the second bridge arm unit and the switching transistor of the third bridge arm unit are turned on alternately,
once the switching transistor Q3 is turned on, the flow direction of the current of the third bridge arm unit is: the connected neutral wire → the switching transistor Q3 → the inductor L3 → the selector switch K3 → the second-phase alternating current power supply 202, so as to charge the inductor L3;
once the switching transistor Q2 is turned off, the flow direction of the current of the second bridge arm unit is: the connected neutral wire → the capacitor C2 → the diode D6 → the inductor L2 → the selector switch K2 → the second-phase alternating current power supply 202, so as to charge the capacitor C2.

A third-phase alternating current of the three-phase power supply is input into a second port of an inductor of a fourth bridge arm unit. When the waveform of the third-phase alternating current is in a positive half cycle, once the switching transistor Q4 is turned on, the flow direction of the current of the fourth bridge arm unit is: the third-phase alternating current power supply 203 → the selector switch K4 → the inductor L4 → the switching transistor Q4 → the connected neutral wire, so as to charge the inductor L4; once the switching transistor Q4 is turned off, the flow direction of the current of the fourth bridge arm unit is: the third-phase alternating current power supply 203 → the selector switch K4 → the inductor L4 → the diode D4 → the capacitor C1 → the connected neutral wire, so as to charge the capacitor C1.

The switching transistors Q2 and Q3 are turned on alternately, and the capacitor C1 and the capacitor C2 are charged alternately through the second bridge arm unit and the third bridge arm unit, thereby reducing ripples of the capacitor C1 and the capacitor C2.

Preferably, the control method further includes:
inputting a positive direct current into a second port of the inductor of the first bridge arm unit and inputting a positive direct current into a second port of the inductor of the second bridge arm unit when the switching of the first switch causes the second port of the inductor of the first bridge arm unit to connect to the positive direct current power supply and when the switching of the second switch causes the second port of the inductor of the second bridge arm unit to connect to the positive direct current power supply; turning on the switching transistor of the first bridge arm unit to charge the inductor of the first bridge arm unit; and turning off the switching transistor of the second bridge arm unit to charge the first capacitor;
after turning on the switching transistor of the first bridge arm unit and turning off the switching transistor of the second bridge arm unit, turning on the switching transistor of the second bridge arm unit to charge the inductor of the second bridge arm unit, and turning off the switching transistor of the first bridge arm unit to charge the first capacitor;
inputting a negative direct current into a second port of the inductor of the third bridge arm unit and inputting a negative direct current into a second port of the inductor of the fourth bridge arm unit when the switching of the third switch causes the second port of the inductor of the third bridge arm unit to connect to the negative direct current power supply and when the switching of the fourth switch causes the second port of the inductor of the fourth bridge arm unit to connect to the negative direct current power supply; turning on the switching transistor of the third bridge arm unit to charge the inductor of the third bridge arm unit; and turning off the switching transistor of the fourth bridge arm unit to charge the second capacitor; and
after turning on the switching transistor of the third bridge arm unit and turning off the switching transistor of the fourth bridge arm unit, turning on the switching transistor of the fourth bridge arm unit to charge the inductor of the fourth bridge arm unit, and turning off the switching transistor of the third bridge arm unit to charge the second capacitor.

The following describes the control method in direct current power supply mode in the present invention in detail with reference to FIG. 2.

In direct current power supply mode (battery mode), a positive direct current is input into a second port of the inductor L1 of the first bridge arm unit and a second port of the inductor L2 of the second bridge arm unit, and
once the switching transistor Q1 is turned on, the flow direction of the current of the first bridge arm unit is: BAT+ → the selector switch K1 → the inductor L1 → the switching transistor Q1 → the connected neutral wire, so as to charge the inductor L1;
once the switching transistor Q2 is turned off, the flow direction of the current of the second bridge arm unit is: BAT+ → the selector switch K2 → the inductor L2 → the diode D2 → the capacitor C1 → the connected neutral wire, so as to charge the capacitor C1. The switching transistors Q2 and Q1 are turned on alternately,
once the switching transistor Q2 is turned on, the flow direction of the current of the second bridge arm unit is: BAT+ → the selector switch K2 → the inductor L2 → the switching transistor Q2 → the connected neutral wire, so as to charge the inductor L2;
once the switching transistor Q1 is turned off, the flow direction of the current of the first bridge arm unit is: BAT+ → the selector switch K1 → the inductor L1 → the diode D1 → the capacitor C1 → the connected neutral wire, so as to charge the capacitor C1.

A positive direct current is input into a second port of the inductor L3 of the third bridge arm unit and a second port of the inductor L4 of the fourth bridge arm unit, and
once the switching transistor Q3 is turned on, the flow direction of the current of the third bridge arm unit is: the connected neutral wire → the switching transistor Q3 → the inductor L3 → the selector switch K3 → BAT-, so as to charge the inductor L3; and
once the switching transistor Q4 is turned off, the flow direction of the current of the fourth bridge arm unit is: the connected neutral wire → the capacitor C2 → the diode D8 → the inductor L4 → the selector switch K4 → BAT-, so as to charge the capacitor C2.

The switching transistors Q3 and Q4 are turned on alternately, and
once the switching transistor Q4 is turned on, the flow direction of the current of the fourth bridge arm unit is: the connected neutral wire → the switching transistor Q4 → the inductor L4 → the selector switch K4 → BAT-, so as to charge the inductor L4; and
once the switching transistor Q3 is turned off, the flow direction of the current of the fourth bridge arm unit is: the connected neutral wire → the capacitor C2 → the diode D7 → the inductor L3 → the selector switch K3 → BAT-, so as to charge the capacitor C2.

In battery mode, the second bridge arm unit and the third bridge arm unit can still work. Therefore, the circuit in the present invention does not set aside circuit components, thereby improving usage of the components.

In battery mode described above, batteries work as a battery group, and the battery group may include a first battery and a second battery that are connected in series, where the cathode of the first battery is connected to the anode of the second battery, and the cathode of the first battery and the anode of the second battery are connected to the neutral wire N.

Detailed above are a circuit and a circuit control method according to the embodiments of the present invention. The description of the embodiments is merely intended to help illustrate the method and core ideas of the present invention. Those skilled in the art can make various variations in terms of the specific implementation and the application scope on the basis of the ideas of the present invention. The content described herein shall not be construed as a limitation on the present invention.

## Claims

1. A circuit, comprising four bridge arm units and two capacitors, wherein the four bridge arm units are a first bridge arm unit, a second bridge arm unit, a third bridge arm unit, and a fourth bridge arm unit, and the two capacitors are a first capacitor and a second capacitor;
each bridge arm unit comprises two diodes (D1 to D8), an inductor (L1 to L4), and a switching transistor (Q1 to D4), wherein for each arm unit the two diodes are a first diode (D1 to D4) and a second diode (D5 to D8), an anode of the first diode (D1 to D4) is connected to a cathode of the second diode (D5 to D8), a joint between the first diode (D1 to D4) and the second diode (D5 to D8) is connected to a first port of the inductor (L1 to L4) and a first port of the switching transistor (Q1 to Q5), and a second port of the switching transistor (Q1 to Q4) is connected to a neutral wire N; a cathode of the first diode (D1 to D4) is connected to a first port of the first capacitor (C1), an anode of the second diode (D5 to D8) is connected to a first port of the second capacitor (C2), and a second port of the first capacitor (C1) and a second port of the second capacitor (C2) are connected to the neutral wire N;
a second port of the inductor (L1) of the first bridge arm unit is configured to connect to a first-phase alternating current power supply (201) of a three-phase power supply; a second port of the inductor (L2) of the second bridge arm unit and a second port of the inductor (L3) of the third bridge arm unit are configured to connect to a second-phase alternating current power supply (202) of the three-phase power supply; and a second port of the inductor (L4) of the fourth bridge arm unit is configured to connect to a third-phase alternating current power supply (203) of the three-phase power supply,
the circuit further comprises a first switch (K1), the second port of the inductor (L1) of the first bridge arm unit is further configured to connect to a positive direct current power supply (BAT +), and the first switch (K1) is configured to cause the second port of the inductor (L1) of the first bridge arm unit to switch between the first-phase alternating current power supply (201) and the positive direct current power supply (BAT +);
the circuit further comprises a second switch (K2), the second port of the inductor (L2) of the second bridge arm unit is further configured to connect to the positive direct current power supply (BAT +), and the second switch (K2) is configured to cause the second port of the inductor (L2) of the second bridge arm unit to switch between the second-phase alternating current power supply (202) and the positive direct current power supply (BAT +);
the circuit further comprises a third switch (K3), the second port of the inductor (L3) of the third bridge arm unit is further configured to connect to a negative direct current power supply (BAT -), and the third switch (K3) is configured to cause the second port of the inductor (L3) of the third bridge arm unit to switch between the second-phase alternating current power supply (202) and the negative direct current power supply (BAT -); and
the circuit further comprises a fourth switch (K4), the second port of the inductor (L4) of the fourth bridge arm unit is further configured to connect to the negative direct current power supply (BAT -), and the fourth switch (K4) is configured to cause the second port of the inductor (L4) of the fourth bridge arm unit to switch between the third-phase alternating current power supply (203) and the negative direct current power supply (BAT -),
wherein the circuit is configured so that in a main supply mode the second bridge arm unit and the third bridge arm unit are connected in parallel and work alternately to charge the same capacitor, the switching transistor (Q2) of the second bridge unit and the switching transistor (Q3) of the third bridge unit are turned on alternately; and wherein in a battery mode the switching transistor (Q2) of the second bridge unit and the switching transistor (Q1) of the first bridge unit are turned on alternately to charge the first capacitor (C1) and the switching transistor (Q3) of the third bridge unit and the switching transistor (Q4) of the fourth bridge unit are turned on alternately to charge the second capacitor (C2).

2. The circuit according to claim 1, wherein:
the switching transistor (Q1, Q2, Q3, Q4) is an insulated gate bipolar transistor or a metal-oxide semiconductor field effect transistor.

3. A method for controlling the circuit according to claim 1, wherein the method comprises:
inputting a first-phase alternating current into a second port of an inductor (L1) of a first bridge arm unit,
in a positive half cycle of the inputting first-phase alternating current,
turning on a switching transistor (Q1) of the first bridge arm unit to charge the inductor (L1) of the first bridge arm unit;
turning off the switching transistor (Q1) of the first bridge arm unit to charge a first capacitor (C1);
in a negative half cycle of the inputting first-phase alternating current,
turning on the switching transistor (Q1) of the first bridge arm unit to charge the inductor (L1) of the first bridge arm unit;
turning off the switching transistor (Q1) of the first bridge arm unit to charge a second capacitor (C2);
inputting a second-phase alternating current into a second port of an inductor (L1) of a second bridge arm unit and a second port of an inductor (L3) of a third bridge arm unit,
in a positive half cycle of inputting the second-phase alternating current,
turning on a switching transistor (Q2) of the second bridge arm unit to charge the inductor (L2) of the second bridge arm unit;
turning off a switching transistor (Q3) of the third bridge arm unit to charge the first capacitor (C1);
after turning on the switching transistor (Q2) of the second bridge arm unit and turning off the switching transistor (Q3) of the third bridge arm unit,
turning on the switching transistor (Q3) of the third bridge arm unit to charge the inductor (L3) of the third bridge arm unit;
turning off the switching transistor (Q2) of the second bridge arm unit to charge the first capacitor (C1);
in a negative half cycle of inputting the second-phase alternating current,
turning on the switching transistor (Q2) of the second bridge arm unit to charge the inductor of the second bridge arm unit;
turning off the switching transistor (Q3) of the third bridge arm unit to charge the second capacitor;
after turning on the switching transistor (Q2) of the second bridge arm unit and turning off the switching transistor (Q3) of the third bridge arm unit,
turning on the switching transistor (Q3) of the third bridge arm unit to charge the inductor (L3) of the third bridge arm unit;
turning off the switching transistor (Q2) of the second bridge arm unit to charge the second capacitor (C2);
inputting a third-phase alternating current into a second port of an inductor (L4) of a fourth bridge arm unit,
in a positive half cycle of inputting the third-phase alternating current,
turning on a switching transistor (Q4) of the fourth bridge arm unit to charge the inductor (L4) of the fourth bridge arm unit;
turning off the switching transistor (Q4) of the fourth bridge arm unit to charge the first capacitor (C1);
in a negative half cycle of inputting the third-phase alternating current,
turning on the switching transistor (Q4) of the fourth bridge arm unit to charge the inductor (L4) of the fourth bridge arm unit;
turning off the switching transistor (Q4) of the fourth bridge arm unit to charge the second capacitor;
inputting a positive direct current into the second port of the inductor (L1) of the first bridge arm unit and inputting a positive direct current into the second port of the inductor (L2) of the second bridge arm unit when switching of the first switch causes the second port of the inductor (L1) of the first bridge arm unit to connect to a positive direct current power supply (BAT +) and when switching of the second switch (K2) causes the second port of the inductor (L2) of the second bridge arm unit to connect to the positive direct current power supply (BAT +);
turning on the switching transistor of (Q1) the first bridge arm unit to charge the inductor (L1) of the first bridge arm unit;
turning off the switching transistor (Q2) of the second bridge arm unit to charge the first capacitor (C1);
after turning on the switching transistor (Q1) of the first bridge arm unit and turning off the switching transistor (Q2) of the second bridge arm unit,
turning on the switching transistor (Q2) of the second bridge arm unit to charge the inductor (L2) of the second bridge arm unit;
turning off the switching transistor (Q1) of the first bridge arm unit to charge the first capacitor (C1);
inputting a negative direct current (BAT -) into the second port of the inductor (L3) of the third bridge arm unit and inputting a negative direct current into the second port of the inductor (L4) of the fourth bridge arm unit when switching of the third switch (K3) causes the second port of the inductor (L3) of the third bridge arm unit to connect to the negative direct current (BAT -) and when switching of the fourth switch (K4) causes the second port of the inductor (L4) of the fourth bridge arm unit to connect to the negative direct current (BAT -);
turning on the switching transistor (Q3) of the third bridge arm unit to charge the inductor (L3) of the third bridge arm unit;
turning off the switching transistor (Q4) of the fourth bridge arm unit to charge the second capacitor (C2);
after turning on the switching transistor (Q3) of the third bridge arm unit and turning off the switching transistor (Q4) of the fourth bridge arm unit,
turning on the switching transistor (Q4) of the fourth bridge arm unit to charge the inductor (L4) of the fourth bridge arm unit; and
turning off the switching transistor (Q3) of the third bridge arm unit to charge the second capacitor (C2),
wherein in a main supply mode the second bridge arm unit and the third bridge arm unit are connected in parallel and work alternately to charge the same capacitor, the switching transistor (Q2) of the second bridge unit and the switching transistor (Q3) of the third bridge unit are turned on alternately;
and wherein in a battery mode the switching transistor (Q2) of the second bridge unit and the switching transistor (Q1) of the first bridge unit are turned on alternately to charge the first capacitor (C1) and the switching transistor (Q3) of the third bridge unit and the switching transistor (Q4) of the fourth bridge unit are turned on alternately to charge the second capacitor (C2).

## Patentansprüche

1. Schaltung, umfassend vier Brückenzweigeinheiten und zwei Kondensatoren, wobei die vier Brückenzweigeinheiten eine erste Brückenzweigeinheit, eine zweite Brückenzweigeinheit, eine dritte Brückenzweigeinheit und eine vierte Brückenzweigeinheit sind und die zwei Kondensatoren ein erster Kondensator und ein zweiter Kondensator sind;
jede Brückenzweigeinheit zwei Dioden (D1 bis D8), einen Induktor (L1 bis L4) und einen Schalttransistor (Q1 bis Q4) umfasst, wobei die beiden Dioden für jede Zweigeinheit eine erste Diode (D1 bis D4) und eine zweite Diode (D5 bis D8) sind, eine Anode der ersten Diode (D1 bis D4) mit einer Kathode der zweiten Diode (D5 bis D8) verbunden ist, eine Verbindung zwischen der ersten Diode (D1 bis D4) und der zweiten Diode (D5 bis D8) mit einem ersten Anschluss des Induktors (L1 bis L4) und einem ersten Anschluss des Schalttransistors (Q1 bis Q5) verbunden ist und ein zweiter Anschluss des Schalttransistors (Q1 bis Q4) mit einem Nullleiter N verbunden ist; eine Kathode der ersten Diode (D1 bis D4) mit einem ersten Anschluss des ersten Kondensators (C1) verbunden ist, eine Anode der zweiten Diode (D5 bis D8) mit einem ersten Anschluss des zweiten Kondensators (C2) verbunden ist und ein zweiter Anschluss des ersten Kondensators (C1) und ein zweiter Anschluss des zweiten Kondensators (C2) mit dem Nullleiter N verbunden sind;
ein zweiter Anschluss des Induktors (L1) der ersten Brückenzweigeinheit konfiguriert ist, um sich mit einer Wechselstromversorgung der ersten Phase (201) einer dreiphasigen Stromversorgung zu verbinden; ein zweiter Anschluss des Induktors (L2) der zweiten Brückenzweigeinheit und ein zweiter Anschluss des Induktors (L3) der dritten Brückenzweigeinheit konfiguriert sind, um sich mit einer Wechselstromversorgung der zweiten Phase (202) einer dreiphasigen Stromversorgung zu verbinden; und ein zweiter Anschluss des Induktors (L4) der vierten Brückenzweigeinheit konfiguriert ist, um sich mit einer Wechselstromversorgung der dritten Phase (203) einer dreiphasigen Stromversorgung zu verbinden;
die Schaltung ferner einen ersten Schalter (K1) umfasst, der zweite Anschluss des Induktors (L1) der ersten Brückenzweigeinheit ferner konfiguriert ist, um sich mit einer positiven Gleichstromversorgung (BAT +) zu verbinden, und der erste Schalter (K1) konfiguriert ist, um zu bewirken, dass der zweite Anschluss des Induktors (L1) der ersten Brückenzweigeinheit zwischen der Wechselstromversorgung der ersten Phase (201) und der positiven Gleichstromversorgung (BAT +) umschaltet; die Schaltung ferner einen zweiten Schalter (K2) umfasst, der zweite Anschluss des Induktors (L2) der zweiten Brückenzweigeinheit ferner konfiguriert ist, um sich mit der positiven Gleichstromversorgung (BAT +) zu verbinden, und der zweite Schalter (K2) konfiguriert ist, um zu bewirken, dass der zweite Anschluss des Induktors (L2) der zweiten Brückenzweigeinheit zwischen der Wechselstromversorgung der zweiten Phase (202) und der positiven Gleichstromversorgung (BAT +) umschaltet; die Schaltung ferner einen dritten Schalter (K3) umfasst, der zweite Anschluss des Induktors (L3) der dritten Brückenzweigeinheit ferner konfiguriert ist, um sich mit der negativen Gleichstromversorgung (BAT -) zu verbinden, und der dritte Schalter (K3) konfiguriert ist, um zu bewirken, dass der zweite Anschluss des Induktors (L3) der dritten Brückenzweigeinheit zwischen der Wechselstromversorgung der zweiten Phase (202) und der negativen Gleichstromversorgung (BAT -) umschaltet; und die Schaltung ferner einen vierten Schalter (K4) umfasst, der zweite Anschluss des Induktors (L4) der vierten Brückenzweigeinheit ferner konfiguriert ist, um sich mit der negativen Gleichstromversorgung (BAT -) zu verbinden, und der vierte Schalter (K4) konfiguriert ist, um zu bewirken, dass der zweite Anschluss des Induktors (L4) der vierten Brückenzweigeinheit zwischen der Wechselstromversorgung der dritten Phase (203) und der negativen Gleichstromversorgung (BAT -) umschaltet, wobei die Schaltung konfiguriert ist, sodass in einem Hauptversorgungsmodus die zweite Brückenzweigeinheit und die dritte Brückenzweigeinheit parallel geschaltet sind und abwechselnd arbeiten, um denselben Kondensator aufzuladen, wobei der Schalttransistor (Q2) der zweiten Brückeneinheit und der Schalttransistor (Q3) der dritten Brückeneinheit abwechselnd eingeschaltet werden;
und wobei in einem Batteriemodus der Schalttransistor (Q2) der zweiten Brückeneinheit und der Schalttransistor (Q1) der ersten Brückeneinheit abwechselnd eingeschaltet werden, um den ersten Kondensator (C1) aufzuladen, und der Schalttransistor (Q3) der dritten Brückeneinheit und der Schalttransistor (Q4) der vierten Brückeneinheit abwechselnd eingeschaltet werden, um den zweiten Kondensator (C2) aufzuladen.

2. Schaltung nach Anspruch 1, wobei:
der Schalttransistor (Q1, Q2, Q3, Q4) ein Bipolartransistor mit isoliertem Gate oder ein Metalloxid-Halbleiter-Feldeffekttransistor ist.

3. Verfahren zum Steuern der Schaltung nach Anspruch 1, wobei das Verfahren umfasst:
Eingeben eines Wechselstroms der ersten Phase in einen zweiten Anschluss eines Induktors (L1) einer ersten Brückenzweigeinheit,
Einschalten eines Schalttransistors (Q1) der ersten Brückenzweigeinheit in einem positiven Halbzyklus des Eingebens des Wechselstroms der ersten Phase, um den Induktor (L1) der ersten Brückenzweigeinheit aufzuladen;
Ausschalten des Schalttransistors (Q1) der ersten Brückenzweigeinheit, um einen ersten Kondensator (C1) aufzuladen;
Einschalten des Schalttransistors (Q1) der ersten Brückenzweigeinheit in einem negativen Halbzyklus des Eingebens des Wechselstroms der ersten Phase, um den Induktor (L1) der ersten Brückenzweigeinheit aufzuladen;
Ausschalten des Schalttransistors (Q1) der ersten Brückenzweigeinheit, um einen zweiten Kondensator (C2) aufzuladen;
Eingeben eines Wechselstroms der zweiten Phasen in einen zweiten Anschluss eines Induktors (L1) einer zweiten Brückenzweigeinheit und einen zweiten Anschluss eines Induktors (L3) einer dritten Brückenzweigeinheit,
Einschalten eines Schalttransistors (Q2) der zweiten Brückenzweigeinheit in einem positiven Halbzyklus des Eingebens des Wechselstroms der zweiten Phase, um den Induktor (L2) der zweiten Brückenzweigeinheit aufzuladen;
Ausschalten eines Schalttransistors (Q3) der dritten Brückenzweigeinheit, um den ersten Kondensator (C1) aufzuladen;
nach dem Einschalten des Schalttransistors (Q2) der zweiten Brückenzweigeinheit und dem Ausschalten des Schalttransistors (Q3) der dritten Brückenzweigeinheit, Einschalten des Schalttransistors (Q3) der dritten Brückenzweigeinheit, um den Induktor (L3) der dritten Brückenzweigeinheit aufzuladen;
Ausschalten des Schalttransistors (Q2) der zweiten Brückenzweigeinheit, um den ersten Kondensator (C1) aufzuladen;
in einem negativen Halbzyklus des Eingebens des Wechselstroms der zweiten Phase, Einschalten des Schalttransistors (Q2) der zweiten Brückenzweigeinheit, um den Induktor der zweiten Brückenzweigeinheit aufzuladen;
Ausschalten des Schalttransistors (Q3) der dritten Brückenzweigeinheit, um den zweiten Kondensator aufzuladen;
nach dem Einschalten des Schalttransistors (Q2) der zweiten Brückenzweigeinheit und dem Ausschalten des Schalttransistors (Q3) der dritten Brückenzweigeinheit, Einschalten des Schalttransistors (Q3) der dritten Brückenzweigeinheit, um den Induktor (L3) der dritten Brückenzweigeinheit aufzuladen;
Ausschalten des Schalttransistors (Q2) der zweiten Brückenzweigeinheit, um den zweiten Kondensator (C2) aufzuladen;
Eingeben eines Wechselstroms der dritten Phase in einen zweiten Anschluss eines Induktors (L4) einer vierten Brückenzweigeinheit,
Einschalten eines Schalttransistors (Q4) der vierten Brückenzweigeinheit in einem positiven Halbzyklus des Eingebens des Wechselstroms der dritten Phase, um den Induktor (L4) der vierten Brückenzweigeinheit aufzuladen;
Ausschalten des Schalttransistors (Q4) der vierten Brückenzweigeinheit, um den ersten Kondensator (C1) aufzuladen;
Einschalten des Schalttransistors (Q4) der vierten Brückenzweigeinheit in einem negativen Halbzyklus des Eingebens des Wechselstroms der dritten Phase, um den Induktor (L4) der vierten Brückenzweigeinheit aufzuladen;
Ausschalten des Schalttransistors (Q4) der vierten Brückenzweigeinheit, um den zweiten Kondensator aufzuladen;
Eingeben eines positiven Gleichstroms in den zweiten Anschluss des Induktors (L1) der ersten Brückenzweigeinheit und Eingeben eines positiven Gleichstroms in den zweiten Anschluss des Induktors (L2) der zweiten Brückenzweigeinheit, wenn das Umschalten des ersten Schalters bewirkt, dass sich der zweite Anschluss des Induktors (L1) der ersten Brückenzweigeinheit mit einer positiven Gleichstromversorgung (BAT +) verbindet und wenn das Umschalten des zweiten Schalters (K2) bewirkt, dass sich der zweite Anschluss des Induktors (L2) der zweiten Brückenzweigeinheit mit der positiven Gleichstromversorgung (BAT +) verbindet;
Einschalten des Schalttransistors (Q1) der ersten Brückenzweigeinheit, um den Induktor (L1) der ersten Brückenzweigeinheit aufzuladen;
Ausschalten des Schalttransistors (Q2) der zweiten Brückenzweigeinheit, um den ersten Kondensator (C1) aufzuladen;
nach dem Einschalten des Schalttransistors (Q1) der ersten Brückenzweigeinheit und dem Ausschalten des Schalttransistors (Q2) der zweiten Brückenzweigeinheit,
Einschalten des Schalttransistors (Q2) der zweiten Brückenzweigeinheit, um den Induktor (L2) der zweiten Brückenzweigeinheit aufzuladen;
Ausschalten des Schalttransistors (Q1) der ersten Brückenzweigeinheit, um den ersten Kondensator (C1) aufzuladen;
Eingeben eines negativen Gleichstroms (BAT -) in den zweiten Anschluss des Induktors (L3) der dritten Brückenzweigeinheit und Eingeben eines negativen Gleichstroms in den zweiten Anschluss des Induktors (L4) der vierten Brückenzweigeinheit, wenn das Umschalten des dritten Schalters (K3) bewirkt, dass sich der zweite Anschluss des Induktors (L3) der dritten Brückenzweigeinheit mit dem negativen Gleichstrom (BAT -) verbindet, und das Umschalten des vierten Schalters (K4) bewirkt, dass sich der zweite Anschluss des Induktors (L4) der vierten Brückenzweigeinheit mit dem negativen Gleichstrom (BAT -) verbindet;
Einschalten des Schalttransistors (Q3) der dritten Brückenzweigeinheit, um den Induktor (L3) der dritten Brückenzweigeinheit aufzuladen;
Ausschalten des Schalttransistors (Q4) der vierten Brückenzweigeinheit, um den zweiten Kondensator (C2) aufzuladen;
nach dem Einschalten des Schalttransistors (Q3) der dritten Brückenzweigeinheit und dem Ausschalten des Schalttransistors (Q4) der vierten Brückenzweigeinheit,
Einschalten des Schalttransistors (Q4) der vierten Brückenzweigeinheit, um den Induktor (L4) der vierten Brückenzweigeinheit aufzuladen; und
Ausschalten des Schalttransistors (Q3) der dritten Brückenzweigeinheit, um den zweiten Kondensator (C2) aufzuladen,
wobei in einem Hauptversorgungsmodus die zweite Brückenzweigeinheit und die dritte Brückenzweigeinheit parallel geschaltet sind und abwechselnd arbeiten, um denselben Kondensator aufzuladen, wobei der Schalttransistor (Q2) der zweiten Brückeneinheit und der Schalttransistor (Q3) der dritten Brückeneinheit abwechselnd eingeschaltet werden;
und wobei in einem Batteriemodus der Schalttransistor (Q2) der zweiten Brückeneinheit und der Schalttransistor (Q1) der ersten Brückeneinheit abwechselnd eingeschaltet werden, um den ersten Kondensator (C1) aufzuladen, und der Schalttransistor (Q3) der dritten Brückeneinheit und der Schalttransistor (Q4) der vierten Brückeneinheit abwechselnd eingeschaltet werden, um den zweiten Kondensator (C2) aufzuladen.

## Revendications

1. Circuit comprenant quatre unités branche de pont et deux condensateurs, les quatre unités branche de pont étant une première unité branche de pont, une deuxième unité branche de pont, une troisième unité branche de pont et une quatrième unité branche de pont, et les deux condensateurs étant un premier condensateur et un second condensateur ;
chaque unité branche de pont comprenant deux diodes (D1 à D8), une inductance (L1 à L4) et un transistor de commutation (Q1 à D4), pour chaque unité les deux diodes étant une première diode (D1 à D4) et une seconde diode (D5 à D8), une anode de la première diode (D1 à D4) étant connectée à une cathode de la seconde diode (D5 à D8), une jonction entre la première diode (D1 à D4) et la seconde diode (D5 à D8) étant connectée à une première borne de l'inductance (L1 à L4) et à une première borne du transistor de commutation (Q1 à Q5), et une seconde borne du transistor de commutation (Q1 à Q4) étant connecté à un fil neutre N ; une cathode de la première diode (D1 à D4) étant connectée à une première borne du premier condensateur (C1), une anode de la seconde diode (D5 à D8) étant connectée à une première borne du second condensateur (C2), et une seconde borne du premier condensateur (C1) et une seconde borne du second condensateur (C2) étant connectées au fil neutre N ;
une seconde borne de l'inductance (L1) de la première unité branche de pont étant configurée pour être connectée à une alimentation électrique à courant alternatif de première phase (201) d'une alimentation électrique triphasée ; une seconde borne de l'inductance (L2) de la deuxième unité branche de pont et une seconde borne de l'inductance (L3) de la troisième unité branche de pont étant configurées pour être connectées à une alimentation électrique à courant alternatif de deuxième phase (202) de l'alimentation électrique triphasée ; et une seconde borne de l'inductance (L4) de la quatrième unité branche de pont étant configurée pour être connectée à alimentation électrique à courant alternatif de troisième phase (203) de l'alimentation électrique triphasée,
le circuit comprenant en outre un premier commutateur (K1), la seconde borne de l'inductance (L1) de la première unité branche de pont étant en outre configurée pour être connectée à une alimentation électrique à courant continu positive (BAT+), et le premier commutateur (K1) étant configuré pour amener la seconde borne de l'inductance (L1) de la première unité branche de pont à commuter entre l'alimentation électrique à courant alternatif de première phase (201) et l'alimentation électrique à courant continu positive (BAT+) ;
le circuit comprenant en outre un deuxième commutateur (K2), la seconde borne de l'inductance (L2) de la deuxième unité branche de pont étant en outre configurée pour être connectée à l'alimentation électrique à courant continu positive (BAT+), et le deuxième commutateur (K2) étant configuré pour amener la seconde borne de l'inductance (L2) de la deuxième unité branche de pont à commuter entre l'alimentation électrique à courant alternatif de deuxième phase (202) et l'alimentation électrique à courant continu positive (BAT+) ;
le circuit comprenant en outre un troisième commutateur (K3), la seconde borne de l'inductance (L3) de la troisième unité branche de pont étant en outre configurée pour être connectée à une alimentation électrique à courant continu négative (BAT-), et le troisième commutateur (K3) étant configuré pour amener la seconde borne de l'inductance (L3) de la troisième unité branche de pont à commuter entre l'alimentation électrique à courant alternatif de deuxième phase (202) et l'alimentation électrique à courant continu négative (BAT-) ; et
le circuit comprenant en outre un quatrième commutateur (K4), la seconde borne de l'inductance (L4) de la quatrième unité branche de pont étant en outre configurée pour être connectée à l'alimentation électrique à courant continu négative (BAT-), et le quatrième commutateur (K4) étant configuré pour amener la seconde borne de l'inductance (L4) de la quatrième unité branche de pont à commuter entre l'alimentation électrique à courant alternatif de troisième phase (203) et l'alimentation électrique à courant continu négative (BAT-),
le circuit étant configuré de sorte que, dans un mode d'alimentation principal, la deuxième unité branche de pont et la troisième unité branche de pont soient connectées en parallèle et travaillent en alternance pour charger le même condensateur, le transistor de commutation (Q2) de la deuxième unité pont et le transistor de commutation (Q3) de la troisième unité pont étant à l'état passant en alternance ;
et dans un mode de batterie, le transistor de commutation (Q2) de la deuxième unité pont et le transistor de commutation (Q1) de la première unité pont étant à l'état passant en alternance pour charger le premier condensateur (C1), et le transistor de (Q3) de la troisième unité pont et le transistor de commutation (Q4) de la quatrième unité pont étant à l'état passant en alternance pour charger le second condensateur (C2).

2. Circuit selon la revendication 1, dans lequel :
le transistor de commutation (Q1, Q2, Q3, Q4) est un transistor bipolaire à grille isolée ou un transistor à effet de champ à semiconducteur à l'oxyde métal.

3. Procédé de commande du circuit selon la revendication 1, le procédé consistant à :
entrer un courant alternatif de première phase dans une seconde borne d'une inductance (L1) d'une première unité branche de pont,
dans un demi-cycle positif du courant alternatif de première phase d'entrée,
mettre à l'état passant un transistor de commutation (Q1) de la première unité branche de pont pour charger l'inductance (L1) de la première unité branche de pont ;
mettre à l'état bloquant le transistor de commutation (Q1) de la première unité branche de pont pour charger un premier condensateur (C1) ;
dans un demi-cycle négatif du courant alternatif de première phase d'entrée,
mettre à l'état passant le transistor de commutation (Q1) de la première unité branche de pont pour charger l'inductance (L1) de la première unité branche de pont ;
mettre à l'état bloquant le transistor de commutation (Q1) de la première unité branche de pont pour charger un second condensateur (C2) ;
entrer un courant alternatif de deuxième phase dans une seconde borne d'une inductance (L1) d'une deuxième unité de branche de pont et une seconde borne d'une inductance (L3) d'une troisième unité branche de pont ;
dans un demi-cycle positif d'entrée du courant alternatif de deuxième phase,
mettre à l'état passant un transistor de commutation (Q2) de la deuxième unité branche de pont pour charger l'inductance (L2) de la deuxième unité branche de pont ;
mettre à l'état bloquant un transistor de commutation (Q3) de la troisième unité branche de pont pour charger le premier condensateur (C1) ;
après la mise à l'état passant du transistor de commutation (Q2) de la deuxième unité branche de pont et la mise à l'état bloquant du transistor de commutation (Q3) de la troisième unité branche de pont,
mettre à l'état passant le transistor de commutation (Q3) de la troisième unité branche de pont pour charger l'inductance (L3) de la troisième unité branche de pont ;
mettre à l'état bloquant le transistor de commutation (Q2) de la deuxième unité branche de pont pour charger le premier condensateur (C1) ;
dans un demi-cycle négatif d'entrée du courant alternatif de deuxième phase,
mettre à l'état passant le transistor de commutation (Q2) de la deuxième unité branche de pont pour charger l'inductance de la deuxième unité branche de pont ;
mettre à l'état bloquant le transistor de commutation (Q3) de la troisième unité branche de pont pour charger le second condensateur ;
après la mise à l'état passant du transistor de commutation (Q2) de la deuxième unité branche de pont et la mise à l'état bloquant du transistor de commutation (Q3) de la troisième unité branche de pont,
mettre à l'état passant le transistor de commutation (Q3) de la troisième unité branche de pont pour charger l'inductance (L3) de la troisième unité branche de pont ;
mettre à l'état bloquant le transistor de commutation (Q2) de la deuxième unité branche de pont pour charger le second condensateur (C2) ;
entrer un courant alternatif de troisième phase dans une seconde borne d'une inductance (L4) d'une quatrième unité branche de pont ;
dans un demi-cycle positif d'entrée du courant alternatif de troisième phase,
mettre à l'état passant un transistor de commutation (Q4) de la quatrième unité branche de pont pour charger l'inductance (L4) de la quatrième unité branche de pont ;
mettre à l'état bloquant le transistor de commutation (Q4) de la quatrième unité branche de pont pour charger le premier condensateur (C1) ;
dans un demi-cycle négatif d'entrée du courant alternatif de troisième phase,
mettre à l'état passant le transistor de commutation (Q4) de la quatrième unité branche de pont pour charger l'inductance (L4) de la quatrième unité branche de pont ;
mettre à l'état bloquant le transistor de commutation (Q4) de la quatrième unité branche de pont pour charger le second condensateur ;
entrer un courant continu positif dans la seconde borne de l'inductance (L1) de la première unité branche de pont et entrer un courant continu positif dans la seconde borne de l'inductance (L2) de la deuxième unité branche de pont lors de la commutation du premier commutateur pour amener la seconde borne de l'inductance (L1) de la première unité branche de pont à se connecter à une alimentation électrique à courant continu positive (BAT+), et lors de la commutation du deuxième commutateur (K2) pour amener la seconde borne de l'inductance (L2) de la deuxième unité branche de pont à se connecter à l'alimentation électrique à courant continu positive (BAT+) ;
mettre à l'état passant le transistor de commutation (Q1) de la première unité branche de pont pour charger l'inductance (L1) de la première unité branche de pont ;
mettre à l'état bloquant le transistor de commutation (Q2) de la deuxième unité branche de pont pour charger le premier condensateur (C1) ;
après la mise à l'état passant du transistor de commutation (Q1) de la première unité branche de pont et la mise à l'état bloquant du transistor de commutation (Q2) de la deuxième unité branche de pont,
mettre à l'état passant le transistor de commutation (Q2) de la deuxième unité branche de pont pour charger l'inductance (L2) de la deuxième unité branche de pont ;
mettre à l'état bloquant le transistor de commutation (Q1) de la première unité branche de pont pour charger le premier condensateur (C1) ;
entrer un courant continu négatif (BAT-) dans la seconde borne de l'inductance (L3) de la troisième unité branche de pont et entrer un courant continu négatif dans la seconde borne de l'inductance (L4) de la quatrième unité branche de pont lors de la commutation du troisième commutateur (K3) pour amener la seconde borne de l'inductance (L3) de la troisième unité branche de pont à se connecter au courant continu négatif (BAT-), et lors de la commutation du quatrième commutateur (K4) pour amener la seconde borne de l'inductance (L4) de la quatrième unité branche de pont à se connecter au courant continu négatif (BAT-) ;
mettre à l'état passant le transistor de commutation (Q3) de la troisième unité branche de pont pour charger l'inductance (L3) de la troisième unité branche de pont ;
mettre à l'état bloquant le transistor de commutation (Q4) de la quatrième unité branche de pont pour charger le second condensateur (C2) ;
après la mise à l'état passant du transistor de commutation (Q3) de la troisième unité branche de pont et la mise à l'état bloquant du transistor de commutation (Q4) de la quatrième unité branche de pont,
mettre à l'état passant le transistor de commutation (Q4) de la quatrième unité branche de pont pour charger l'inductance (L4) de la quatrième unité branche de pont ; et
mettre à l'état bloquant le transistor de commutation (Q3) de la troisième unité branche de pont pour charger le second condensateur (C2),
dans un mode d'alimentation principal, la deuxième unité branche de pont et la troisième unité branche de pont étant connectées en parallèle et travaillant en alternance pour charger le même condensateur, le transistor de commutation (Q2) de la deuxième unité pont et le transistor de commutation (Q3) de la troisième unité pont étant à l'état passant en alternance ;
et dans un mode de batterie, le transistor de commutation (Q2) de la deuxième unité pont et le transistor de commutation (Q1) de la première unité pont étant à l'état passant en alternance pour charger le premier condensateur (C1), et le transistor de (Q3) de la troisième unité pont et le transistor de commutation (Q4) de la quatrième unité pont étant à l'état passant en alternance pour charger le second condensateur (C2).
